# NOUVEAU FASCICULE DE BREVET EUROPEEN

(11) **EP 2 676 016 B2**
(45) Date de publication et mention de la décision concernant l'opposition: **12.02.2025**
(45) Mention de la délivrance du brevet: 14.10.2015
(21) Numéro de dépôt: 12705320.5
(22) Date de dépôt: 11.01.2012
(51) Int. Cl.: F01N 3/035, F02B 37/00, F01N 3/20, F01N 13/08, B60K 13/04

(54) **ENSEMBLE DE POST-TRAITEMENT DES GAZ D'ECHAPPEMENT D'UN MOTEUR A COMBUSTION SURALIMENTE, ET VEHICULE AUTOMOBILE COMPORTANT UN TEL ENSEMBLE**
ABGASNACHBEHANDLUNGSBAUGRUPPE FÜR EINEN VERBRENNUNGSMOTOR UND KRAFFTAHRZEUG MIT EINER SOLCHEN BAUGRUPPE
EXHAUST GAS POST TREATMENT UNIT OF AN INTERNAL COMBUSTION ENGINE AND VEHICLE COMPRISING SUCH UNIT

(30) Priorité: 18.02.2011 FR 1151374
(43) Date de publication de la demande: 25.12.2013
(73) Titulaire: Faurecia Systèmes d'Echappement, 92000 Nanterre (FR)
(72) Inventeur: FERRAND, Nicolas, F-92000 Nanterre (FR); LERE, Sylvain, F-75018 Paris (FR); TRAIZET, Gregoire, F-91120 Palaiseau (FR); FERHAN, Mehdi, F-73490 La Ravoire (FR); CEREIJO, Manuel, F-75020 Paris (FR)
(74) Mandataire: Lavoix
(86) Numéro de dépôt international: PCT/FR2012/050073
(87) Numéro de publication internationale: WO 2012/110720

(56) Documents cités:
- EP-A1- 1 162 098
- EP-A1- 1 162 351
- EP-A1- 1 947 307
- WO-A2-2009/134831
- JP-A- 2005 155 404

## Description

L'invention porte sur le domaine des moyens de traitement des polluants des gaz d'échappement des moteurs à combustion.

Les émissions polluantes des moteurs à combustion équipant les véhicules automobiles sont réglementées par des normes de plus en plus sévères. Les polluants réglementés sont - selon la technologie de moteur à combustion considérée - le monoxyde de carbone (CO), les hydrocarbures imbrûlés (HC), les oxydes d'azotes (NOx), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Pour satisfaire aux normes anti-pollution sur les émissions d'oxydes d'azote (NOx), un système spécifique de post-traitement peut être introduit dans la ligne d'échappement des véhicules, notamment des véhicules équipés de moteurs diesel. Pour le traitement des oxydes d'azote (NOx), on connaît des technologies de réduction catalytique sélective, ou « SCR » pour « selective catalytic réduction », qui consistent à réduire les NOx par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

L'agent réducteur généré permet de réduire les oxydes d'azotes par réaction dans un catalyseur SCR, c'est-à-dire un substrat portant une imprégnation catalytique apte à favoriser la réduction des NOx par l'agent réducteur.

Les technologies de réduction catalytique sélective présentent l'avantage de permettre un très haut niveau de conversion des oxydes d'azotes.

D'une manière générale, la catalyse SCR nécessite d'ajouter un substrat catalytique dans la ligne d'échappement, ainsi qu'un moyen d'introduction du réducteur dans les gaz d'échappement, qui peut par exemple être un injecteur de réducteur.

Classiquement, le catalyseur SCR est placé sous la caisse du véhicule, loin du moteur car le réducteur injecté a besoin d'un long parcours dans la ligne d'échappement pour se décomposer d'une part, et de volumes libres suffisants pour s'implanter d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (adblue) ou préchauffage du système de mise à disposition de réducteur (gaz)), souffre de cet éloignement de la sortie du collecteur d'échappement.

Il est connu de la demande de brevet français déposée au nom de la demanderesse sous le numéro FR 10 50453 (non publiée à ce jour) ou de la demande publiée de brevet européen EP 1947307 A1 un système compact de traitement des gaz d'échappement regroupant dans une enveloppe unique et dans cet ordre :
- Un catalyseur d'oxydation ;
- Une embouchure d'un moyen d'introduction de réducteur ou de précurseur d'un réducteur pour la réduction catalytique sélective des oxydes d'azote ;
- Un mélangeur pour le mélange des gaz d'échappement et du réducteur et/ou la conversion du précurseur en réducteur ;
- Un catalyseur de réduction catalytique sélective des oxydes d'azote ;

L'enveloppe décrite dans cette demande est d'une longueur relativement faible grâce à la mise en jeu de nombreuses optimisations décrites dans cette demande de brevet.

Néanmoins, l'architecture ainsi proposée peut présenter notamment trois inconvénients, selon l'application à laquelle on la destine. Dans une application automobile, elle est particulièrement adaptée à une implantation verticale dans l'espace sous-capot moteur d'un moteur à combustion dont la sortie du collecteur d'échappement est située en face avant, c'est-à-dire du côté de la face avant du véhicule équipé (si celui-ci présente un espace sous capot moteur dans sa partie avant, ce qui est majoritairement le cas dans les applications automobiles). En outre, cette architecture requiert de réaliser une connexion plus ou moins complexe avec la sortie d'un turbocompresseur, cette connexion pouvant générer des pertes thermiques d'autant plus important qu'elle est longue ou présente des surfaces importante, comme par exemple dans le cas d'un coude de liaison. Enfin, bien que particulièrement compacte, l'architecture connue dans l'état de la technique requiert de manière générale un volume d'implantation contraignant dans une direction donnée, celle de la « longueur » de l'enveloppe.

Dans l'invention, on vise à résoudre ces problèmes par l'adoption d'une architecture optimisée.

Plus précisément, l'invention porte sur un ensemble de post-traitement des gaz d'échappement d'un moteur à combustion suralimenté par un turbocompresseur comportant, selon le sens d'écoulement des gaz d'échappement du moteur :
- un turbocompresseur ;
- un catalyseur d'oxydation ;
- un catalyseur de réduction catalytique sélective des oxydes d'azote ;
- un filtre à particules
caractérisé en ce que l'ensemble est disposé selon une architecture sensiblement en « U » comportant :
- une première et une seconde branche sensiblement parallèles ;
- la première branche rectiligne comportant le turbocompresseur et le catalyseur d'oxydation, une enveloppe du catalyseur d'oxydation étant directement raccordée en sortie de la turbine du turbocompresseur ;
- la seconde branche rectiligne comportant le catalyseur de réduction catalytique sélective des oxydes d'azote et le filtre à particules ;
- et un raccord fluidique entre les première et seconde branches ;

De préférence, le filtre à particule est du type à mettant en jeu un additif abaissant la température d'oxydation des particules de suie. Un tel filtre dit « additivé » présente l'avantage, grâce à sa plus faible température d'oxydation des suies comparé à un filtre sans additif (dit « catalysé ») de pouvoir être implanté en aval d'un catalyseur SCR sans que son fonctionnement ne soit trop pénalisé par les pertes thermiques liées à sont éloignement de la sortie, du moteur. En outre, si le filtre à particules et le catalyseur SCR sont constitué d'un unique monolithe de traitement, le niveau de températures plus faible du filtre lors de ses régénérations permet une dégradation moindre de l'imprégnation SCR sur le filtre.

De préférence, l'ensemble comporte en outre entre le catalyseur d'oxydation et le catalyseur de réduction catalytique sélective des oxydes d'azote :
- une embouchure d'un moyen d'introduction de réducteur ou de précurseur d'un réducteur pour la réduction catalytique sélective des oxydes d'azote ;
- des moyens de mélange aptes à assurer un mélange sensiblement homogène des gaz d'échappement et du réducteur et/ou la conversion du précurseur en réducteur.

Dans une variante de l'invention, le raccord forme ou comporte les moyens de mélange. Cela permet d'obtenir un mélange homogène entre les gaz d'échappement et le réducteur SCR dès l'entrée de la seconde branche.

Dans une autre variante de l'invention, les moyens de mélange comportent un mélangeur dans la seconde branche. Cela permet l'emploi de mélangeurs performants, connus dans l'état de la technique.

Selon l'invention, l'enveloppe du catalyseur d'oxydation est directement raccordée en sortie de la turbine du turbocompresseur. C'est la meilleure configuration pour éviter toute perte thermique entre ces éléments.

De préférence, la seconde branche est comporte une enveloppe unique regroupant le catalyseur de réduction catalytique sélective des oxydes d'azote et le filtre à particules. Cela offre une meilleure compacité, réduit les coûts d'obtention, et évite toute perte de charge entre les éléments de la seconde branche.

De préférence, le catalyseur de réduction catalytique sélective des oxydes d'azote et le filtre à particules sont constitués par un unique monolithe de traitement des gaz d'échappement. C'est une solution compacte et efficace pour permettre un traitement complet des gaz d'échappement, qui permet également d'augmenter le volume de stockage maximum du filtre à particules pour une même allocation de volume aux deux fonctions que sont la réduction des NOx et la réduction des particules.

De préférence, la seconde branche comporte un convergent à évacuation latérale. Cela permet de limiter la hauteur du « U », et oriente favorablement les gaz d'échappement dans une application automobile.

Dans une variante, le raccord forme une troisième branche droite entre la sortie de la première branche et l'entrée de la seconde branche.

Dans ce cadre, la troisième branche peut être orthogonale aux première et seconde branches, et présenter un coude à angle droit à chacune de ses extrémités pour son raccordement aux premières et secondes branches.

De préférence, le raccord comporte alors une plaque de jonction entre la première branche et la seconde branche, plaque surmontée d'une coupelle creuse. C'est un mode de constitution simple et efficace. Il permet en outre de moduler la forme de la coupelle pour favoriser le mélange d'un réducteur dans les gaz d'échappement.

De préférence, le U présente une largeur d'au plus 600mm, et de préférence de l'ordre de 380mm. Une telle largeur, distance extrême entre les branches du « U », est adaptée à un usage automobile de l'invention, pour son implantation en zone sous-capot moteur.

De préférence, le U présente une hauteur d'au plus 600mm et de préférence de l'ordre de 400mm. Une telle hauteur, distance extrême entre l'extérieur du raccord et l'extrémité de la plus longue des branches du « U », est adaptée à un usage automobile de l'invention, pour son implantation en zone sous-capot moteur.

Un ensemble conforme à l'invention peut également présenter une ou plusieurs des caractéristiques suivantes :
- le catalyseur d'oxydation présente une densité de cellule comprise entre 62 et 140 cellules par centimètre carré, et de préférence de l'ordre de 93 cellules par centimètres carré ;
- le catalyseur d'oxydation présente une épaisseur de paroi comprise entre 50 µm et 165 µm;
- le catalyseur de réduction catalytique sélective des oxydes d'azote présente une densité de cellule comprise entre 62 et 140 cellules par centimètre carré, et de préférence de l'ordre de 93 cellules par centimètres carré ;
- le catalyseur de réduction catalytique sélective des oxydes d'azote (6) présente une épaisseur de paroi comprise entre 50 µm et 165 µm ;

L'invention porte aussi sur un véhicule automobile comportant moteur à combustion disposé dans un espace sous-capot, qui comprend un ensemble selon l'invention dans ledit espace sous-capot.

De préférence, l'ensemble est disposé entre une face du moteur et un tablier séparant l'espace sous-capot d'un habitacle.

L'invention est décrite plus en détail ci-après et en référence aux figures représentant schématiquement le système dans son mode de réalisation préférentiel.
- La figure 1 présente schématiquement en trois dimensions l'invention selon un premier mode de réalisation.
- La figure 2 présente le même mode de réalisation que celui présenté en figure 1 selon une vue schématique en coupe partielle.
- La figure 3 présente une variante du premier mode de réalisation, selon une vue schématique en coupe partielle.
- La figure 4 présente une deuxième variante du premier mode de réalisation, selon une vue schématique en coupe partielle.
- La figure 5 présente une troisième variante du premier mode de réalisation, selon une vue schématique en coupe partielle.
- La figure 6 présente schématiquement en trois dimensions l'invention selon un deuxième mode de réalisation.
- La figure 7 présente schématiquement une vue de côté de ce second mode de réalisation.
- La figure 8 présente schématiquement en trois dimensions l'invention selon un deuxième mode de réalisation.
- La figure 9 présente schématiquement une vue de côté de ce troisième mode de réalisation.
- La figure 10 présente schématiquement un quatrième mode de réalisation.

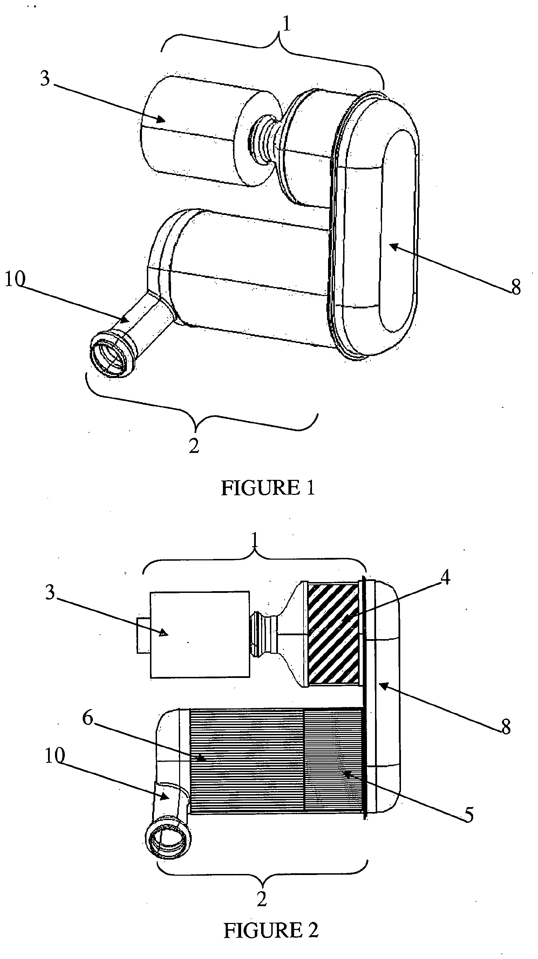

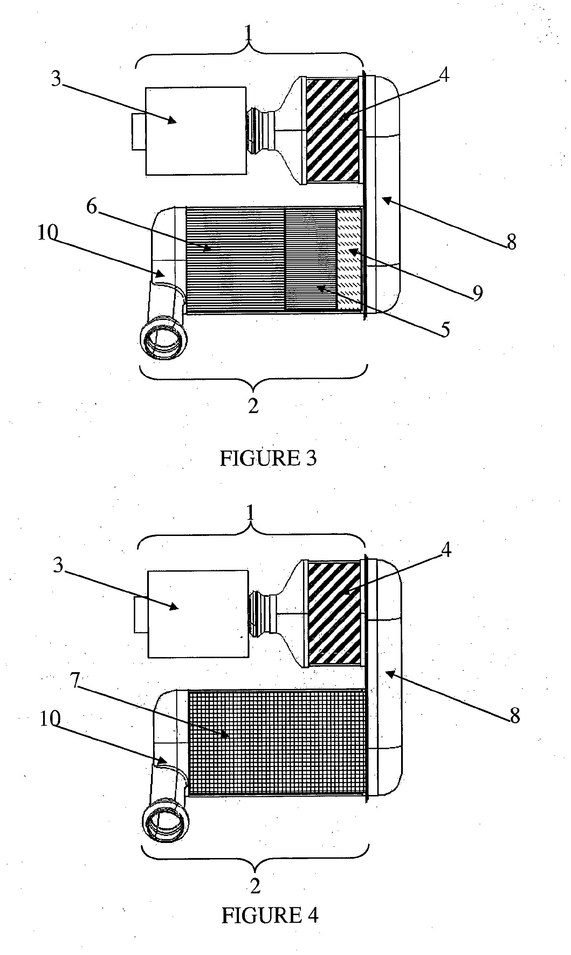

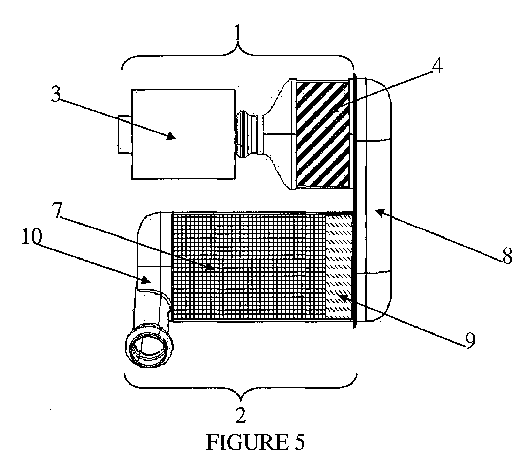

La figure 1 présente un ensemble selon un mode de réalisation préférentiel de l'invention, selon une vue extérieure schématique en 3 dimensions. La figure 2 présente le même mode de réalisation, selon une vue en coupe partielle (les enveloppes contenant des monolithe de traitement des gaz d'échappement sont représentées schématiquement en coupe, de sorte à permettre de visualiser les différentes monolithes mis en jeu). Les figures 3 à 5 présentent de la même manière des variantes de réalisation.

Un ensemble selon l'invention comporte une première branche 1 rectiligne 1 et une seconde branche rectiligne 2. Dans l'invention, la première et la seconde branche sont sont sensiblement parallèles de sorte à former les deux branches d'une architecture en « U »,

La première branche comporte un turbocompresseur 3 et, dans une enveloppe ou « canning » appropriée, un catalyseur d'oxydation 4. Le catalyseur d'oxydation sert principalement au traitement des hydrocarbures imbrûlés (HC) et du monoxyde de carbone (CO) dans le cadre d'un moteur Diesel.

La seconde branche comporte un catalyseur de réduction catalytique sélective des oxydes d'azote, ou catalyseur SCR 5. La seconde branche comporte également un filtre à particule 6. Le catalyseur SCR 5 et le filtre à particules 6 peuvent, selon la variante de l'invention considérée, être contenus dans une enveloppe unique, voire être regroupés en un unique monolithe dit « FAP/SCR » 7, à savoir un filtre à particules portant une imprégnation de réduction catalytique sélective des oxydes d'azote.

Le filtre à particule 6 est préférentiellement d'un type mettant en jeu un additif permettant d'abaisser la température d'oxydation des suies. Cette caractéristique permet au filtre de se régénérer à des températures plus basses qu'un filtre dit « catalysé » (désignant un filtre n'employant pas d'additif d'abaissement de la température d'oxydation des suies).

La première branche 1 est reliée à la seconde branche par un raccord fluidique 8 permettant le transport des gaz d'échappement de la sortie de la première branche vers l'entrée de la seconde branche (les notions d'entrée et de sortie se comprenant dans l'ensemble du présent document selon le sens d'écoulement des gaz d'échappement dans l'ensemble selon l'invention).

Ce raccord peut également avoir un rôle important dans le traitement des gaz d'échappement. En effet, la catalyse SCR nécessite l'introduction et le mélange dans les gaz d'échappement d'un réducteur (agent réducteur ou précurseur d'un tel agent) par des moyens appropriés tel qu'un injecteur dédié (non représentés sur les figures). L'embouchure d'un moyen d'introduction peut avantageusement être située dans le raccord fluidique 8, de préférence vers l'entrée du dit raccord afin de maximiser la distance entre le point d'introduction, de réducteur et le catalyseur SCR 5, une telle distance favorisant le mélange du réducteur dans les gaz d'échappement.

La forme du raccord 8 peut également être optimisée de sorte à favoriser (voire totalement réaliser) le mélange homogène du réducteur et des gaz d'échappement.

Une configuration en U telle que proposée dans l'invention est d'ailleurs favorable à ce phénomène.

Le raccord 8 confère à l'ensemble en U, dans l'optique d'une application automobile, une largeur maximale de 600mm et pourra notamment lui conférer une largeur de l'ordre de 380mm. La largeur du U désigne la largeur hors tout entre les deux branches.

L'invention présente des première et seconde branches sensiblement parallèles. La notion de forme en « U » doit s'interpréter de manière restrictive, de sorte qu'une forme sensiblement plus proche d'un « V » ne peut pas entrer dans la définition de l'invention. On considérerait alors la largeur maximale du « V ». En revanche, les deux branches du U constituées respectivement par la première branche 1 et la seconde branche 2 peuvent bien évidemment être reliées par un raccord 8 courbe ou droit sans sortir du cadre de l'invention.

La notion de « U » ne préjuge pas de son orientation en utilisation. Ainsi, dans une application automobile, les première et seconde branche pourront (et seront généralement) positionnées sensiblement horizontalement.

Dans la variante préférentielle de l'invention ici présentée, et ce à toutes les figures, le raccord 8 est constitué d'une plaque de liaison entre la première branche 1 et la seconde branche 2, et d'une coupelle creuse formant ainsi un corps creux faisant raccord.

Le raccord 8 peut comporter un mélangeur 9 rapporté, c'est-à-dire un dispositif apte à générer des turbulences et/ou à augmenter la distance parcourue par les gaz d'échappement de sorte à favoriser leur mélange homogène avec le réducteur, ou augmenter leur temps de transport avant l'atteinte du catalyseur SCR, afin par exemple de permettre la transformation en agent réducteur d'un précurseur d'un tel agent.

Un mélangeur 9 peut, selon la variante de l'invention considérée, être disposé dans la seconde branche en amont du catalyseur SCR 5 ou du monolithe FAP/SCR 7. On peut dans ce cadre employer préférentiellement un mélangeur du type connu au travers du document FR2947003. Cependant, et selon l'application précise considérée, dans la mesure où le mélange peut être largement engagé dans le raccord par sa seule géométrie ou grâce à d'autres artifices, un mélangeur plus simple et moins coûteux peut être employé, par exemple un mélangeur mettant en jeu une ou plusieurs grilles de mélange, ou des ailettes disposées en quinconce.

La seconde branche inclut également un convergent de sortie 10 afin de canaliser les gaz d'échappement traité par l'ensemble selon l'invention. Ce convergent présente préférentiellement une évacuation latérale. Cela permet d'en limiter la longueur et d'orienter le flux des gaz d'échappement de manière adéquate.

De préférence, la première branche 1 et la seconde branche 2 présentent des longueurs sensiblement égales. Ceci est rendu possible par la répartition des fonctions proposée dans l'invention à savoir, la suralimentation et la catalyse des HC et CO dans la première branche 1, le traitement des NOx et des particules dans la seconde branche 2. De cette répartition découle un avantage majeur en termes de facilité d'implantation d'un ensemble selon l'invention.

Pour une application automobile classique présentant un moteur de type Diesel, on pourra notamment employer :
- un turbocompresseur du type à géométrie fixe ou variable ;
- un catalyseur d'oxydation d'un diamètre compris entre 114mm (4,5 pouces) et 178mm (7pouces) et préférentiellement de l'ordre de 144 mm (5,66 pouces) et d'une longueur de 76mm à 127mm (3 à 5 pouces), et de préférence de l'ordre de 102mm (4 pouces) ;
- un monolithe FAP/SR d'un diamètre compris entre 114mm (4,5 pouces) et 178mm (7pouces) et préférentiellement de l'ordre de 144 mm (5,66 pouces) et d'une longueur de 127mm à 203mm (5 à 8 pouces), et de préférence de l'ordre de 152mm (6 pouces) ;

Dans une application automobile, la hauteur du U c'est-à-dire la longueur de la plus grande des branches à laquelle s'ajoute la dimension du raccord selon l'axe de la branche, sera préférentiellement inférieure à 600mm et pourra notamment être de l'ordre de 400mm.

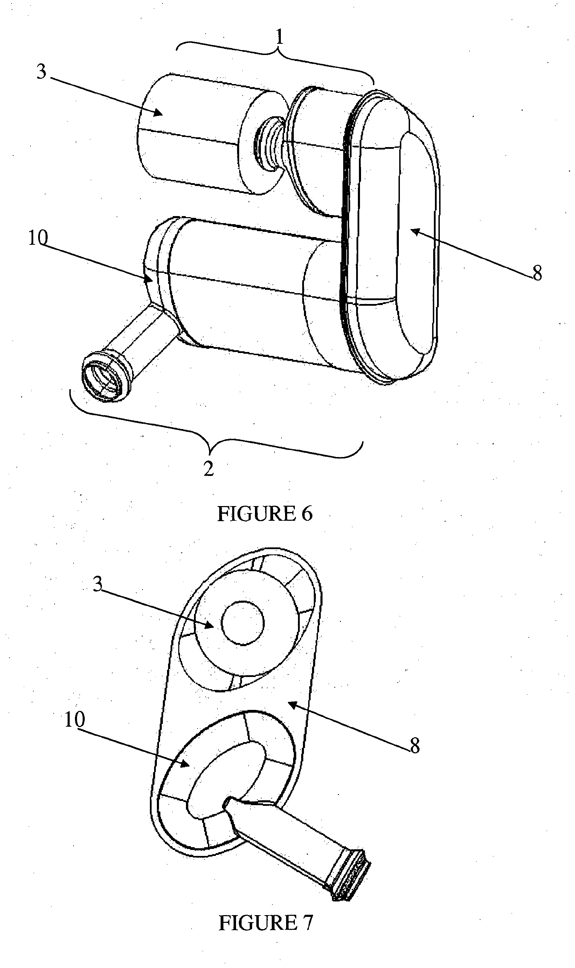

Il est également possible d'employer des monolithes de traitement qui ne sont pas cylindriques ronds. Les figures 6 et 7 illustrent cela avec des monolithes de section ovalisée.

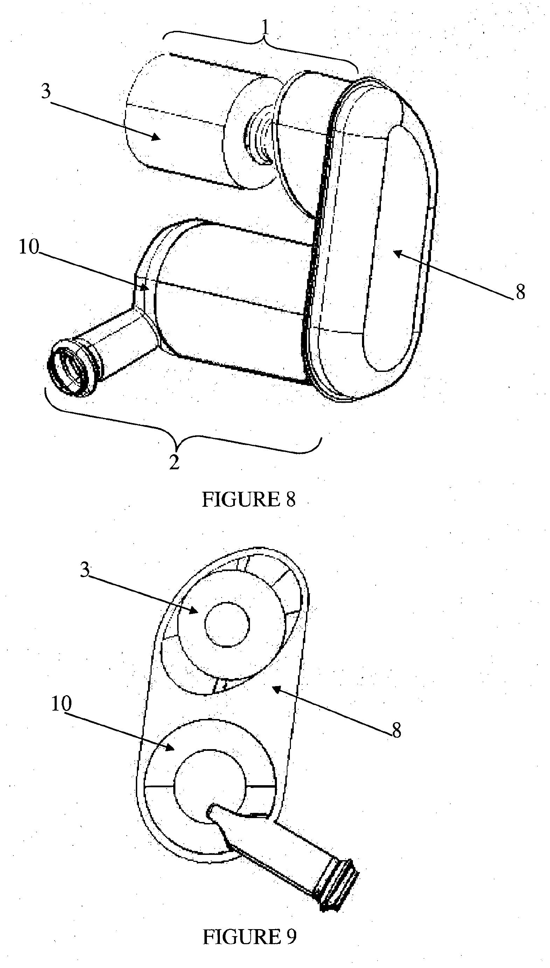

Il est possible d'employer des monolithes cylindriques ronds en combinaison avec des monolithes non cylindriques ronds. Les figures 8 et 9 présentent ainsi un dispositif selon l'invention comportant un catalyseur d'oxydation ovalisé et des fonctions de traitement des NOx et des particules par un ou plusieurs monolithes cylindriques ronds.

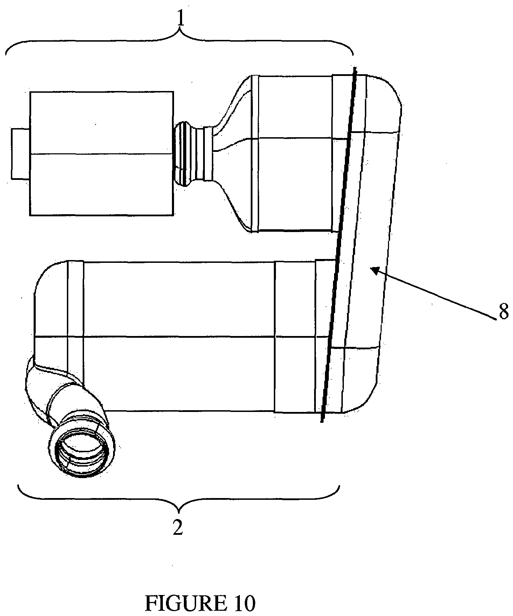

Enfin, le raccord 8 peut être oblique vis-à-vis des deux branches, sans sortir du cadre de l'invention, tel que présenté en figure 10. Cette architecture avec raccord 8 oblique est compatible de toutes les variantes de l'invention, par exemple avec des monolithes de traitement cylindriques ronds, ovalisés, ou avec un mélange de monolithes cylindriques rond et ovalisés.

L'invention ainsi développée, en permettant une répartition suivant deux axes des éléments de dépollution, favorise l'implantation d'un ensemble complet de traitement des gaz d'échappement d'un moteur à combustion dans un environnement contraint où l'ensemble ne peut être implanté suivant un seul axe. Positionner le catalyseur d'oxydation au plus près de la sortie du turbocompresseur permet de limiter les déperditions thermiques et de limiter les inerties thermiques s'opposant au chauffage rapide du catalyseur d'oxydation par les gaz d'échappement (une inertie thermique importante est pénalisant pour l'amorçage du catalyseur, notamment dans le cadre des cycles normalisés d'homologation). Positionner le catalyseur d'oxydation directement en sortie dans l'alignement de la sortie du turbocompresseur est la meilleure architecture pour permettre un amorçage rapide du catalyseur d'oxydation, et permet donc d'en limiter la dimension. En outre les pertes de charge sont entre la turbine et le catalyseur sont limitées.

De même, un positionnement au plus près de la sortie de la turbine du catalyseur SCR favorise sa montée rapide en température, et donc son amorçage. Un choix de pièces intermédiaires, et notamment du raccord, de faible dimension et présentant une faible inertie thermique permet d'optimiser cette montée en température.

Une architecture selon l'invention permet donc un cercle vertueux quant au dimensionnement des monolithes de traitement des gaz d'échappement, ce qui en facilite d'autant plus l'implantation dans un environnement contraint et en réduit le coût.

Une architecture selon l'invention, avec une première et une seconde branche non coaxiale favorise en outre le mélange d'un réducteur SCR introduit en amont de la seconde branche, par exemple dans le raccord. Avec un raccord comportant une coupelle creuse, il est notamment possible d'optimiser sa forme pour favoriser au maximum le mélange du réducteur dans les gaz d'échappement.

Enfin, l'implantation d'un ensemble selon l'invention dans un espace sous-capot moteur d'un véhicule automobile offre un potentiel de gain de masse important par rapport aux architectures connues, notamment en permettant la suppression de tout dispositif de post-traitement sous caisse ainsi que tout dispositif de calfeutrage (écrans thermiques, etc.) généralement disposés sous le plancher du véhicule pour minimiser les pertes thermiques avant l'entrée dans les moyens de traitement des gaz implanté sous le plancher.

## Revendications

1. Ensemble de post-traitement des gaz d'échappement d'un moteur à combustion suralimenté par un turbocompresseur comportant, selon le sens d'écoulement des gaz d'échappement du moteur :
• un turbocompresseur (3) comprenant une turbine;
• un catalyseur d'oxydation (4);
• un catalyseur de réduction catalytique sélective des oxydes d'azote (5);
• un filtre à particules (6);
**caractérisé en ce que** l'ensemble est disposé selon une architecture sensiblement en « U » comportant :
• une première et une seconde branche sensiblement parallèles ;
• la première branche (1) rectiligne comportant le turbocompresseur (3) et le catalyseur d'oxydation (4), une enveloppe du catalyseur d'oxydation (4) étant directement raccordée en sortie de la turbine du turbocompresseur (3) ;
• la seconde branche (2) rectiligne comportant le catalyseur de réduction catalytique sélective des oxydes d'azote (5) et le filtre à particules (6) ;
• et un raccord (8) fluidique entre les première et seconde branches (1,2).

2. Ensemble selon la revendication 1, **caractérisé en ce que** le filtre à particule (6) est du type à mettant en jeu un additif abaissant la température d'oxydation des particules de suie.

3. Ensemble selon la revendication 1, comportant en outre entre le catalyseur d'oxydation (4) et le catalyseur de réduction catalytique sélective des oxydes d'azote (5) :
• une embouchure d'un moyen d'introduction de réducteur ou de précurseur d'un réducteur pour la réduction catalytique sélective des oxydes d'azote ;
• des moyens de mélange aptes à assurer un mélange sensiblement homogène des gaz d'échappement et du réducteur et/ou la conversion du précurseur en réducteur.

4. Ensemble selon la revendication 3, dans lequel l'embouchure du moyen d'introduction est située dans le raccord (8) fluidique.

5. Ensemble selon la revendication 4, dans lequel l'embouchure du moyen d'introduction est située vers l'entrée du raccord (8) fluidique.

6. Ensemble selon l'une des revendications 3 à 5, dans lequel le raccord forme ou comporte les moyens de mélange.

7. Ensemble selon l'une des revendications 3 à 5, dans lequel les moyens de mélanges comportent un mélangeur (9) dans la seconde branche.

8. Ensemble selon l'une des revendications 1 à 7, dans lequel la seconde branche (2) comporte une enveloppe unique regroupant le catalyseur de réduction catalytique sélective des oxydes d'azote (5) et le filtre à particules (6).

9. Ensemble selon la revendication 8, dans lequel le catalyseur de réduction catalytique sélective des oxydes d'azote (5) et le filtre à particules (6) sont constitués par un unique monolithe (7) de traitement des gaz d'échappement.

10. Ensemble selon la revendication 9, dans lequel le filtre à particules porte une imprégnation catalytique sélective des oxydes d'azote.

11. Ensemble selon l'une des revendications précédentes, dans lequel la seconde branche (2) comporte un convergent (10) à évacuation latérale.

12. Ensemble selon l'une des revendications précédentes, dans lequel le raccord (8) forme une troisième branche droite entre la sortie de la première branche (1) et l'entrée de la seconde branche (2).

13. Ensemble selon la revendication 12, dans lequel la troisième branche est orthogonale aux première et seconde branches (1,2), et présente un coude à angle droit à chacune de ses extrémités pour son raccordement aux premières et secondes branches (1,2).

14. Ensemble selon l'une des revendications précédentes, dans lequel le raccord (8) comporte une plaque de jonction entre la première branche (1) et la seconde branche (2), plaque surmontée d'une coupelle creuse.

15. Ensemble selon l'une des revendications précédentes, dans lequel que le U présente une largeur d'au plus 600mm, et de préférence de l'ordre de 380mm.

16. Ensemble selon l'une quelconque des revendications précédentes, dans lequel le U présente une hauteur d'au plus 600mm et de préférence de l'ordre de 400mm.

17. Ensemble selon l'une quelconque des revendications précédentes, présentant au moins une des caractéristiques suivantes :
• le catalyseur d'oxydation (4) présente une densité de cellule comprise entre 62 et 140 cellules par centimètre carré, et de préférence de l'ordre de 93 cellules par centimètres carré ;
• le catalyseur d'oxydation (4) présente une épaisseur de paroi comprise entre 50 µm et 165 µm ;
• le catalyseur de réduction catalytique sélective des oxydes d'azote (6) présente une densité de cellule comprise entre 62 et 140 cellules par centimètre carré, et de préférence de l'ordre de 93 cellules par centimètres carré ;
• le catalyseur de réduction catalytique sélective des oxydes d'azote (6) présente une épaisseur de paroi comprise entre 50 µm et 165 µm ;

18. Véhicule automobile comportant un moteur à combustion interne disposé dans un espace sous-capot, **caractérisé en ce qu'**il comprend un ensemble selon l'une quelconque des revendications précédentes dans le dit espace sous-capot.

## Patentansprüche

1. Abgasnachbehandlungsbaugruppe eines Verbrennungsmotors, der von einem Turboverdichter aufgeladen wird, die in die Strömungsrichtung der Abgase des Motors umfasst:
• einen Turboverdichter (3);
• einen Oxidationskatalysator (4);
• einen Katalysator mit selektiver katalytischer Reduktion der Stickstoffoxide (5);
• ein Partikelfilter (6);
**dadurch gekennzeichnet, dass** die Baugruppe gemäß einer im Wesentlichen "U"-förmigen Architektur angeordnet ist, die Folgendes umfasst:
• einen ersten Schenkel und einen zweiten Schenkel, die im Wesentlichen parallel zueinander verlaufen;
• einen ersten geradlinigen Zweig (1), der den Turboverdichter (3) und den Oxidationskatalysator (4) umfasst, wobei ein Mantel des Oxidationskatalysators (4) direkt an den Ausgang der Turbine des Turboverdichters (3) angeschlossen ist;
• einen zweiten geradlinigen Zweig (2), der den Katalysator mit selektiver katalytischer Reduktion der Stickstoffoxide (5) und das Partikelfilter (6) umfasst;
• und einen Fluidanschluss (8) zwischen dem ersten und dem zweiten Zweig (1, 2).

2. Baugruppe nach Anspruch 1, **dadurch gekennzeichnet, dass** das Partikelfilter (6) des Typs ist, bei dem ein Zusatzstoff verwendet wird, der die Oxidationstemperatur der Rußpartikel senkt.

3. Baugruppe nach Anspruch 1, die außerdem zwischen dem Oxidationskatalysator (4) und dem Katalysator mit selektiver katalytischer Reduktion der Stickstoffoxide (5) Folgendes umfasst:
• eine Mündung eines Mittels zum Einführen eines Reduziermittels oder Vorläufers eines Reduziermittels für die selektive katalytische Reduktion der Stickstoffoxide;
• Mittel zum Mischen, die geeignet sind, ein im Wesentlichen homogenes Mischen der Abgase und des Reduktionsmittels und/oder der Umwandlung des Vorläufers in Reduktionsmittel sicherzustellen.

4. Baugruppe nach Anspruch 3, wobei die Mündung des Einführmittels in dem Fluidanschluss (8) liegt.

5. Baugruppe nach Anspruch 4, wobei die Mündung des Einführmittels zum Eingang des Fluidanschlusses (8) hin liegt.

6. Baugruppe nach einem der Ansprüche 3 bis 5, wobei der Anschluss die Mischmittel bildet oder umfasst.

7. Baugruppe nach einem der Ansprüche 3 bis 5, wobei die Mischmittel einen Mischer (9) in dem zweiten Zweig umfassen.

8. Baugruppe nach einem der Ansprüche 1 bis 7, wobei der zweite Zweig (2) einen einzigen Mantel umfasst, der den Katalysator zur selektiven katalytischen Reduktion der Stickstoffoxide (5) und das Partikelfilter (6) gruppiert.

9. Baugruppe nach Anspruch 8, wobei der Katalysator zur selektiven katalytischen Reduktion der Stickstoffoxide (5) und das Partikelfilter (6) aus einem einzigen Behandlungsmonolith (7) der Abgase bestehen.

10. Baugruppe nach Anspruch 9, wobei das Partikelfilter eine selektive katalytische Imprägnierung der Stickstoffoxide trägt.

11. Baugruppe nach einem der vorhergehenden Ansprüche, wobei der zweite Zweig (2) eine Verjüngung (10) mit seitlicher Ableitung umfasst.

12. Baugruppe nach einem der vorhergehenden Ansprüche, wobei der Anschluss (8) einen dritten Zweig zwischen dem Ausgang des ersten Zweigs (1) und dem Eingang des zweiten Zweigs (2) bildet.

13. Baugruppe nach Anspruch 12, wobei der dritte Zweig orthogonal zu dem ersten und dem zweiten Zweig (1, 2) ist und ein Winkelrohr im rechten Winkel an jedem seiner Enden für sein Anschließen an den ersten und den zweiten Zweig (1, 2) hat.

14. Baugruppe nach einem der vorhergehenden Ansprüche, wobei der Anschluss (8) eine Verbindungsplatte zwischen dem ersten Zweig (1) und dem zweiten Zweig (2) hat, wobei eine hohle Schale über der Platte liegt.

15. Baugruppe nach einem der vorhergehenden Ansprüche, wobei das U eine Breite von mindestens 600 mm und vorzugsweise in der Größenordnung von 380 mm aufweist.

16. Baugruppe nach einem der vorhergehenden Ansprüche, wobei das U eine Höhe von mehr als 600 mm und vorzugsweise in der Größenordnung von 400 mm aufweist.

17. Baugruppe nach einem der vorhergehenden Ansprüche, die mindestens eines der folgenden Merkmale aufweist:
• der Oxidationskatalysator (4) weist eine Zellendichte zwischen 62 und 140 Zellen pro Quadratzentimeter auf und vorzugsweise in der Größenordnung von 93 Zellen pro Quadratzentimeter;
• der Oxidationskatalysator (4) weist eine Wandstärke zwischen 50 µm und 165 µm auf;
• der Katalysator zur selektiven katalytischen Reduktion der Stickstoffoxide (6) weist eine Zellendichte zwischen 62 und 140 Zellen pro Quadratzentimeter auf und vorzugsweise in der Größenordnung von 93 Zellen pro Quadratzentimeter;
• der Katalysator zur selektiven katalytischen Reduktion der Stickstoffoxide (6) weist eine Wandstärke zwischen 50 µm und 165 µm auf.

18. Kraftfahrzeug, das einen Verbrennungsmotor umfasst, der in einem Raum unter der Motorhaube angeordnet ist, **dadurch gekennzeichnet, dass** er eine Baugruppe nach einem der vorhergehenden Ansprüche in dem Raum unter der Motorhaube umfasst.

## Claims

1. An assembly for post-treating the exhaust gases of a supercharged combustion engine via a turbocharger comprising, in the direction of flow of the exhaust gases of the engine:
• a turbocharger (3);
• an oxidation catalyst (4);
• a catalyst for the selective catalytic reduction of nitrogen oxides (5);
• a particle filter (6);
**characterized in that** the assembly is arranged according to a substantially U-shaped architecture, comprising:
• a first branch and a second branch that are substantially parallel;
a first straight branch (1) comprising the turbocharger (3) and the oxidation catalyst (4), a casing of the oxidation catalyst (4) is directly connected at the outlet of the turbine of the turbocharger (3);
• a second straight branch (2) comprising the catalyst for the selective catalytic reduction of nitrogen oxides (5) and the particle filter (6);
• and a fluid connection (8) between the first and second branches (1, 2).

2. The assembly according to Claim 1, **characterized in that** the particle filter (6) is of the type bringing into play an additive lowering the oxidation temperature of the soot particles.

3. The assembly according to Claim 1, further comprising between the oxidation catalyst (4) and the catalyst for the selective catalytic reduction of nitrogen oxides (5):
• an opening of an introduction means of reducing agent or of precursor of a reducing agent for the selective catalytic reduction of nitrogen oxides;
• mixing means able to ensure a substantially homogeneous mixing of the exhaust gases and of the reducing agent and/or the conversion of the precursor into reducing agent.

4. The assembly according to Claim 3, in which the opening of the introduction means is situated in the fluid connection (8).

5. The assembly according to Claim 4, in which the opening of the introduction means is situated towards the inlet of the fluid connection (8).

6. The assembly according to one of Claims 3 to 5, in which the connection forms or comprises the mixing means.

7. The assembly according to one of Claims 3 to 5, in which the mixing means comprise a mixer (9) in the second branch.

8. The assembly according to one of Claims 1 to 7, in which the second branch (2) comprises a single casing grouping together the catalyst for the selective catalytic reduction of nitrogen oxides (5) and the particle filter (6).

9. The assembly according to Claim 8, in which the catalyst for the selective catalytic reduction of nitrogen oxides (5) and the particle filter (6) are constituted by a single monolith (7) for the treatment of the exhaust gases.

10. The assembly according to Claim 9, in which the particle filter carries a selective catalytic impregnation of the nitrogen oxides.

11. The assembly according to one of the preceding claims, in which the second branch (2) comprises a lateral evacuation convergent (10).

12. The assembly according to one of the preceding claims, in which the connection (8) forms a third straight branch between the outlet of the first branch (1) and the inlet of the second branch (2).

13. The assembly according to Claim 12, in which the third branch is orthogonal to the first and second branches (1, 2), and has a right-angle bend at each of its ends for its connecting to the first and second branches (1, 2).

14. The assembly according to one of the preceding claims, in which the connection (8) comprises a junction plate between the first branch (1) and the second branch (2), which plate is surmounted by a hollow cap.

15. The assembly according to one of the preceding claims, in which the U has a width of a maximum of 600 mm, and preferably in the order of 380 mm.

16. The assembly according to any one of the preceding claims, in which the U has a height of a maximum of 600 mm and preferably in the order of 400 mm.

17. The assembly according to any one of the preceding claims, having at least one of the following characteristics:
• the oxidation catalyst (4) has a cell density comprised between 62 and 140 cells per square centimetre, and preferably in the order of 93 cells per square centimetre;
• the oxidation catalyst (4) has a wall thickness comprised between 50 µm and 165 µm;
• the catalyst for the selective catalytic reduction of nitrogen oxides (6) has a cell density comprised between 62 and 140 cells per square centimetre, and preferably in the order of 93 cells per square centimetre;
• the catalyst for the selective catalytic reduction of nitrogen oxides (6) has a wall thickness comprised between 50 µm and 165 µm.

18. A motor vehicle comprising an internal combustion engine disposed in an under-bonnet space, **characterized in that** it includes an assembly according to any one of the preceding claims in said under-bonnet space.
